# EUROPÄISCHE PATENTSCHRIFT

(11) **EP 3 932 521 B1**
(45) Veröffentlichungstag und Bekanntmachung des Hinweises auf die Patenterteilung: **27.09.2023**
(21) Anmeldenummer: 20020303.2
(22) Anmeldetag: 29.06.2020
(51) Int. Cl.: B01D 53/14

(54) **VERFAHREN ZUM REINIGEN EINES SCHWEFELKOMPONENTEN UND KOHLENWASSERSTOFFE ENTHALTENDEN ROHGASSTROMS**
PROCESS FOR PURIFYING A CRUDE GAS STREAM CONTAINING SULPHUR COMPONENTS AND HYDROCARBONS
PROCÉDÉ DE PURIFICATION D'UN FLUX DE GAZ BRUT CONTENANT DES COMPOSANTS DE SOUFRE ET DES HYDROCARBURES

(43) Veröffentlichungstag der Anmeldung: 05.01.2022
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Gubrinski, Alfred, 64390 Erzhausen (DE); Rappold, Dorit, 60437 Frankfurt am Main (DE); Wilken, Michael, 60439 Frankfurt (DE)
(74) Vertreter: Dropsch, Holger

(56) Entgegenhaltungen:
- EP-A1- 3 539 641
- WO-A1-2014/175337
- US-A- 3 823 222
- US-A- 4 372 925
- US-A1- 2010 104 490
- US-A1- 2016 250 590

## Beschreibung

### Gebiet der Erfindung

Die Erfindung betrifft ein Verfahren zum Reinigen eines Schwefelkomponenten und Kohlenwasserstoffe enthaltenden Rohgasstroms, beispielsweise eines Regenerierungsabgases, das durch Rückspülen bzw. Desorbieren eines Adsorbers erhalten wird, der zuvor zum Abscheiden von Schwefelkomponenten aus einem Kohlenwasserstoffe enthaltenden Strom, zum Beispiel Erdgas, verwendet wurde. Die Erfindung betrifft ferner eine Anlage zur Durchführung des erfindungsgemäßen Verfahrens.

### Stand der Technik

Die Erdgasqualitäten von Erdgaslagerstätten, die derzeit genutzt werden, werden kontinuierlich schlechter. Daher gewinnt die Befreiung des Erdgases von Spurenverunreinigungen wie z. B. Carbonylsulfid (COS), Quecksilber und insbesondere Mercaptanen, neben der klassischen Abtrennung von Schwefelwasserstoff (H₂S), Kohlendioxid (CO₂) und der Trocknung bzw. Wasserentfernung zunehmend an Bedeutung. Gewöhnlich werden die Wasseranteile und die Mercaptane durch Adsorption an geeigneten Adsorbentien, beispielsweise Molekularsieben, entfernt, was eine periodische Regenerierung der Adsorbentien erfordert. Bei der Regenerierung werden die adsorbierten Spurenbestandteile üblicherweise durch Beaufschlagen der beladenen Adsorbentien mit einem Spülgas entfernt (Desorptionsschritt), das dann als Regenerierungsabgas ausgeleitet wird.

Das die unerwünschten Spurenbestandteile enthaltende Regenerierungsabgas muss einer Nachbehandlung unterzogen werden, da es so nicht an die Atmosphäre abgegeben und im Allgemeinen auch nicht intern weiterverwendet werden kann. Um daher die Spurenkomponenten aus dem Regenerierungsabgas wiederzugewinnen, muss die Reinigung des Regenerierungsabgases für unterschiedliche Konzentrationen und unterschiedliche Arten der Spurenbestandteile ausgelegt werden. In den aus dem Stand der Technik bekannten, kontinuierlich arbeitenden Abgasbehandlungsverfahren erfolgt die Gaswäsche unter Verwendung eines flüssigen Absorptionsmittels oder Waschmittels. Bekannte und häufig angewendete Verfahren dieser Art sind das Rectisol-Verfahren und das Purisol-Verfahren, die beide in Ullmann's Encyclopedia of Industrial Chemistry, 6. Aufl. Bd. 15, S. 399 ff. grundsätzlich beschrieben werden. Diese Verfahren bestehen hauptsächlich aus einem Absorptionsabschnitt und einem Regenerierungsabschnitt, in dem das die Spurenkomponenten enthaltende Abgas freigesetzt und gegebenenfalls weiterverarbeitet wird.

Im Rectisol-Verfahren erfolgt die Aufnahme der oben erwähnten, unerwünschten Störkomponenten durch kaltes, d. h. signifikant unter Umgebungstemperatur abgekühltes Methanol als Absorbens oder Waschmittel, wobei in einer Absorberkolonne, auch als Waschkolonne bezeichnet, ein intensiver Stoffaustausch zwischen dem Rohgas und dem Absorptionsmittel bzw. Waschmittel erfolgt. Dabei erhöht sich die Löslichkeit der unerwünschten Gasbestandteile drastisch mit sinkender Temperatur des Methanols und zunehmendem Druck, während sie für Wasserstoff und Kohlenmonoxid praktisch konstant bleibt. Methanol hat zudem den Vorteil, selbst bei Temperaturen bis hinab zu -75 °C noch eine geringe Viskosität und somit gute Stoff- und Wärmeübertragungseigenschaften aufzuweisen. Das als Waschmittel verwendete, mit den Störkomponenten beladene Methanol wird im Rectisol-Verfahren über Regenerierungsvorrichtungen im Kreis gefahren.

Bei dem Purisol-Verfahren, das ebenfalls ein physikalisches Absorptionsverfahren darstellt, werden die Spurenkomponenten mittels N-Methylpyrrolidon (NMP) als Absorptionsmittel oder Waschmittel bei Umgebungstemperatur oder - in Verbindung mit einer Kälteerzeugungsanlage - bei Temperaturen bis zu - 15 °C absorbiert. Auch bei diesem Gaswäscheverfahren wird das Waschmittel durch Behandlung in einer Regenerierungsanlage durch Erhitzen, Druckentspannung (Flashen) oder Hindurchleiten von Inertgasen (Strippen) regeneriert und zum Absorptionsteil der Anlage zurückgeführt. Typische Arbeitsdrücke und Arbeitstemperaturen beim Purisol-Verfahren liegen zwischen 5 und 80 bar(a) bzw. zwischen 0 und 60° C, teilweise, wie oben ausgeführt, auch darunter. Die Regenerierung des Waschmittels erfolgt durch Entspannung (Flashen), im Bedarfsfall auch durch Erwärmung (Heißregenerierung). Die dabei abgetriebenen, schwefelhaltigen Komponenten können in einer Claus-Anlage zu elementarem Schwefel umgesetzt werden. Das regenerierte physikalische Waschmittel wird erneut der Absorption aufgegeben.

Ferner existieren weitere physikalische Absorptions- bzw. Gaswaschverfahren, die sich vor allem in der Art des verwendeten, für Schwefelkomponenten selektiven Waschmittels. Ihnen ist gemein, dass sie flüssig und mindestens teilweise mit Wasser mischbar sind und einen höheren Siedepunkt als Wasser aufweisenden. Beispiele für solche Waschmittel sind Propylencarbonat sowie Mischungen von Polyethylenglycol-dialkylethern, vorzugsweise Polyethylenglycol-dimethylethern.

Weiterhin sind besondere Maßnahmen sinnvoll, um die zeitliche Fluktuation der Konzentrationen der Spurenkomponenten im Regenerierungsabgas während der Desorption zu kontrollieren. Diese zeitliche Fluktuation der Spurenkomponenten, beispielsweise der Schwefelkomponenten, ist für nachgeschaltete Anlagen, beispielsweise eine Claus-Anlage zur Wiedergewinnung von Schwefel, oft nicht akzeptabel. In den Offenlegungsschriften DE 10 2005 059 101 A1 und WO 2019/ 174 787 A1 werden daher geeignete Maßnahmen vorgeschlagen.

Während des Adsorptionsschrittes, bei dem der Adsorber beladen wird, scheiden sich aufgrund ihrer Affinität zum Adsorptionsmittel und/oder ihrer erhöhten Molmasse auch leichte und insbesondere schwerere Kohlenwasserstoffe ab; als Beispiele können die BTX-Aromaten, also Benzol, Toluol und Xylole genannt werden. Auch diese Komponenten gelangen beim Rückspülen bzw. Desorbieren des Adsorbers in das Regenerierungsabgas, das sodann als Rohgasstrom einem Reinigungsschritt, beispielsweise durch Gaswäsche, zugeführt wird. Problematisch ist es dabei, dass sich schwerere Kohlenwasserstoffe aufgrund ihrer geringen Flüchtigkeit im Regenerierungsschritt des Gaswaschverfahrens, beispielsweise bei der Heißregenerierung, nicht oder nur unvollständig aus dem Waschmittel entfernen lassen und sich somit in diesem anreichern, was dessen Reinigungswirkung und Selektivität beeinträchtigt. Dies gilt auch für schwerere Mercaptane, also Mercaptane mit höherer Molmasse.

### Beschreibung der Erfindung

Es ist daher die Aufgabe der vorliegenden Erfindung, die vorgenannten Probleme zu vermeiden und ein Verfahren sowie eine entsprechende Anlage zum Reinigen eines Schwefelkomponenten und Kohlenwasserstoffe enthaltenden Rohgasstroms anzugeben, bei dem eine unerwünschte Anreicherung schwerer Kohlenwasserstoffe und schwerer Mercaptane im Waschmittel vermieden wird.

Diese Aufgabe wird in einem ersten Aspekt der Erfindung durch ein Verfahren mit den Merkmalen des Anspruchs 1 und mit einer Anlage mit den Merkmalen des Anspruchs 11 gelöst. Weitere Ausgestaltungen der Erfindung gemäß weiterer Aspekte ergeben sich aus den Unteransprüchen der jeweiligen Kategorie.

Unter Schwefelkomponenten werden im Zusammenhang mit der vorliegenden Erfindung anorganische und organische, Schwefel enthaltende Komponenten verstanden, insbesondere Schwefelwasserstoff H₂S, Carbonylsulfid COS, Kohlenstoffdisufid (Schwefelkohlenstoff) CS₂ und Mercaptane RSH, wobei R für einen organischen Rest steht. Mercaptane, deren Rest R fünf oder mehr Kohlenstoffatome enthält, werden als schwere Mercaptane bezeichnet. Mercaptane, deren Rest R vier oder weniger Kohlenstoffatome enthält, werden dagegen als leichte Mercaptane bezeichnet.

Als kurzkettige Kohlenwasserstoffe werden im Rahmen der vorliegenden Erfindung insbesondere diejenigen Kohlenwasserstoffe verstanden, die bei Umgebungsbedingungen gasförmig vorliegen, beispielsweise Methan, Ethan, Ethylen, Propan, Propylen sowie die isomeren Butane und Butene. Als längerkettige Kohlenwasserstoffe werden im Rahmen der vorliegenden Erfindung insbesondere diejenigen Kohlenwasserstoffe verstanden, die bei Umgebungsbedingungen flüssig vorliegen, also insbesondere Kohlenwasserstoffe mit fünf oder mehr Kohlenstoffatomen. Als Untergruppe der längerkettigen Kohlenwasserstoffe werden diejenigen nichtaromatischen Kohlenwasserstoffe, die neun oder mehr Kohlenstoffatome enthalten, sowie aromatische Kohlenwasserstoffe als schwere Kohlenwasserstoffe bezeichnet. Aufgrund ihres Siedeverhaltens werden für die Zwecke der vorliegenden Erfindung auch die BTX-Aromaten als schwere Kohlenwasserstoffe bezeichnet. Nichtaromatische Kohlenwasserstoffe, die acht oder weniger Kohlenstoffatome enthalten, werden dagegen als leichte Kohlenwasserstoffe bezeichnet.

Die Aggregatzustände fest, flüssig und gasförmig bzw. dampfförmig sind immer in Bezug auf die lokalen physikalischen Bedingungen zu verstehen, die bei dem jeweiligen Verfahrensschritt oder in dem jeweiligen Anlagenteil herrschen, sofern nichts anderes angegeben ist. Im Rahmen der vorliegende Anmeldung sind die Aggregatzustände gasförmig bzw. dampfförmig als synonym zu betrachten.

Unter einem physikalisch wirkenden, für Schwefelkomponenten selektiven Waschmittel wird ein flüssiger Stoff oder ein flüssiges Stoffgemisch verstanden, dessen Lösungsvermögen für Schwefelkomponenten, ausgedrückt durch die jeweilige Henry-Konstante, unter gegebenen Verfahrensbedingungen, insbesondere Druck und Temperatur, höher ist als für vergleichbar strukturierte und/oder vergleichbar schwere, schwefelfreie Komponenten. Das Waschvermögen beruht auf der Absorption der entsprechenden Komponenten durch Aufnahme und Verteilung innerhalb der Volumenphase des Waschmittels, nicht dagegen auf der Ausbildung chemischer Bindungen zwischen Waschmittel und abzutrennender Komponente. Demzufolge sind physikalisch wirkende Waschmittel durch Druckerniedrigung und/oder Temperaturerhöhung in der Regel regenerierbar, wobei die zuvor absorbierten Komponenten in chemisch unveränderter Weise wiedergewonnen werden.

Eine Absorptionskolonne, alternative Bezeichnungen z. B. Gaswäscher, Waschkolonne oder Scrubber, ist ein verfahrenstechnischer Apparat, in dem ein Gasstrom mit einem Flüssigkeitsstrom intensiv in Kontakt gebracht wird, um Bestandteile des Gasstroms in der Flüssigkeit aufzunehmen. Seine Auslegung zielt darauf ab, für einen möglichst guten Stoffübergang zwischen der Gas- und Flüssigphase eine möglichst große Flüssigkeitsoberfläche zu erzeugen. Dies kann durch das Erzeugen von Blasen oder Tropfen oder durch das Berieseln von festen Oberflächen erfolgen. Daher werden zumeist oberflächenvergrößernde Einbauten wie Böden, beispielsweise Siebböden oder Glockenböden, oder strukturierte Packungen vorgesehen; alternativ können Sektionen der Absorptionskolonne mit Füllkörpern wie beispielsweise Kugeln, Zylindern, Ringen oder Sätteln gefüllt sein. Konstruktiv sind Absorptionskolonnen zumeist als stehende Rohre ggf. durch Kombination von Rohrschüssen ausgestaltet, die sich entlang einer parallel zur Vertikalen verlaufenden Längsachse erstrecken und die einen Innenraum der Absorptionskolonne umschließen.

Unter einem Trennboden werden alle Einbauten von Absorptionskolonnen, insbesondere speziell ausgestaltete Kolonnenböden verstanden, die es ermöglichen, dass in der Kolonne aufsteigende Dampf- oder Gasströme durch den Trennboden hindurchtreten können, während er für in der Kolonne abfließende bzw. absteigende Flüssigkeitsströme undurchlässig ist, so dass sich diese auf dem Trennboden ansammeln und über einen separaten Auslass (Seitenabzug) abgezogen und somit aus der Kolonne ausgeleitet werden. Der Trennboden wird daher auch als Abzugsboden oder Sammelboden bezeichnet. Er bildet gewissermaßen einen zweiten Kolonnensumpf zwischen dem oberen und dem unteren Ende der Kolonne. Eine bekannte Ausgestaltung eines Trennbodens ist diejenige als Kaminboden.

Als Heißregenerierungskolonne wird verfahrenstechnischer Apparat verstanden, der in konstruktiver Hinsicht einer Absorptionskolonne ähnelt, aber dessen Aufgabe es ist, mit Gaskomponenten beladenes Absorbens bzw. Waschmittel durch Zufuhr von Wärme möglichst weitgehend von diesen durch Desorption zu befreien und somit das Waschmittel zu regenerieren. Technisch wird dies beispielsweise dadurch erreicht, dass die Heißregenerierungskolonne mit einem Aufkocher zum Erhitzen des Kolonnensumpfs ausgestattet wird, wodurch Waschmittel-Eigendampf erzeugt wird, der als Austriebs-, Desorptions- bzw. Strippmittel dient und somit die Desorption der Gaskomponenten vorantreibt.

Unter einem Anreichern oder Abreichern einer Komponente in einem Gemisch, einer Fraktion oder einem Stoffstrom ist eine Maßnahme, Arbeitsschritt oder Verfahrensschritt zu verstehen, der dazu führt, dass sich der Stoffmengenanteil (Molenbruch) oder Massenanteil (Massenbruch) dieser Komponente erhöht (Anreichern) oder erniedrigt (Abreichern).

Unter dem überwiegenden Teil einer Fraktion, eines Stoffstroms etc. ist ein Anteil zu verstehen, der mengenmäßig größer ist als alle anderen jeweils für sich betrachteten Anteile. Insbesondere bei binären Gemischen oder bei der Auftrennung einer Fraktion in zwei Teile ist darunter ein Anteil von mehr als 50 Gew.-% zu verstehen, sofern im konkreten Fall nichts anderes angegeben ist.

Unter der Angabe, dass ein Stoffstrom überwiegend aus einer Komponente oder Komponentengruppe besteht, ist zu verstehen, dass der Stoffmengenanteil (Molenbruch) oder Massenanteil (Massenbruch) dieser Komponente oder Komponentengruppe mengenmäßig größer ist als alle anderen jeweils für sich betrachteten Anteile anderer Komponenten oder Komponentengruppen in dem Stoffstrom. Insbesondere bei binären Gemischen ist darunter ein Anteil von mehr als 50 % zu verstehen. Sofern im konkreten Fall nichts anderes angegeben ist, wird hierbei der Massenanteil (Massenbruch) zugrunde gelegt.

Unter einem Aufteilen oder Auftrennen bzw. Abtrennen eines Stoffstroms ist im Zusammenhang mit der vorliegenden Erfindung die Erzeugung mindestens zweier Teilströme aus dem ursprünglichen Stoffstrom zu verstehen, wobei mit dem Auftrennen bzw. Abtrennen eine beabsichtigte Änderung der stofflichen Zusammensetzung der erhaltenen Teilströme in Bezug auf den ursprünglichen Stoffstrom verbunden ist, beispielsweise durch Anwendung eines thermischen Trennverfahrens auf den ursprünglichen Stoffstrom. Dagegen ist mit dem Aufteilen des ursprünglichen Stoffstroms in der Regel keine Änderung der stofflichen Zusammensetzung der erhaltenen Teilströme verbunden.

Als leichte bzw. schwere Flüssigphase werden im Rahmen dieser Erfindung zwei nicht oder begrenzt mischbare Flüssigphasen verstanden, die sich im Ruhezustand horizontal übereinander ablagern, wobei die leichte Flüssigphase eine geringere Dichte aufweist als die schwere Flüssigphase, sich die beiden Phasen aufgrund ihrer Nichtmischbarkeit oder begrenzten Mischbarkeit voneinander trennen und sich daher die leichte Flüssigphase oberhalb der schweren Flüssigphase ablagert. Ein verfahrenstechnischer Apparat, der so ausgestaltet ist, dass sich diese Phasentrennung und zusätzlich die Abtrennung einer Gasphase vollziehen kann, wird als Gas-Flüssig-Flüssig-Phasentrennvorrichtung bezeichnet.

Unter Fluidverbindung zwischen zwei Bereichen der erfindungsgemäßen Vorrichtung wird dabei jegliche Art von Verbindung verstanden, die es ermöglicht, dass ein Fluid, beispielsweise ein Gasstrom, von dem einen zu dem anderen der beiden Bereiche strömen kann, unbeachtlich etwaiger zwischengeschalteter Bereiche oder Bauteile. Insbesondere wird unter einer direkten Fluidverbindung jegliche Art von Verbindung verstanden, die es ermöglicht, dass ein Fluid, beispielsweise ein Gasstrom, direkt von dem einen zu dem anderen der beiden Bereiche strömen kann, wobei keine weiteren Bereiche oder Bauteile zwischengeschaltet sind, mit Ausnahme reiner Transportvorgänge und der dazu benötigten Mittel, beispielsweise Rohrleitungen, Ventile, Pumpen, Verdichter, Vorratsbehälter. Ein Beispiel wäre eine Rohrleitung, die direkt dem einen zu dem anderen der beiden Bereiche führt.

Unter einem Mittel wird eine Sache verstanden, die die Erreichung eines Zieles ermöglicht oder dabei behilflich ist. Insbesondere werden unter Mitteln zum Durchführen eines bestimmten Verfahrensschrittes alle diejenigen physischen Gegenstände verstanden, die der Fachmann in Betracht ziehen würde, um diesen Verfahrensschritt durchführen zu können. Beispielsweise wird der Fachmann als Mittel zum Einleiten oder Ausleiten eines Stoffstroms alle Transport- und Fördervorrichtungen, also z. B. Rohrleitungen, Pumpen, Verdichter, Ventile, in Betracht ziehen, die ihm aufgrund seines Fachwissens zur Durchführung dieses Verfahrensschrittes notwendig oder sinnvoll erscheinen.

Etwaige Druckangaben im Zusammenhang mit der vorliegenden Erfindung, die in der Einheit bar(a) angegeben werden, beziehen sich auf den Absolutdruck in bar, absolut, sofern es nicht im Einzelfall anders angegeben wird.

Der Erfindung liegt die Erkenntnis zugrunde, dass es vorteilhaft ist, den Rohgasstrom nach Einleiten in die Absorptionskolonne zunächst mit einer kleinen Menge des Waschmittels vorzuwaschen. Dies erfolgt zweckmäßig in einer unteren Sektion der Absorptionskolonne, die mittels eines für die Gasphase durchlässigen, aber für die Flüssigphase undurchlässigen Trennbodens, bevorzugt eines Kaminbodens, von der oberen Sektion der Absorptionskolonne abgetrennt ist. Auf diese Weise wird eine kleine Menge des eines an schweren Kohlenwasserstoffen und an schweren Mercaptanen angereicherten zweiten Waschmittelstroms aus der unteren Kolonnensektion gewonnen, der sodann zu der Heißregenerierung geführt und dort optional gesondert und getrennt von übrigen beladenen Waschmittelströmen behandelt werden kann. Die getrennte Vorbehandlung des Rohgasstroms in der unteren Kolonnensektion gestattet es zudem, diesen optional mit einem besonderen Waschmittel vorzubehandeln, beispielsweise mit dem auch in der oberen Kolonnensektion eingesetzten Waschmittel, dem aber ein Additiv zugegeben wurde, um seine Selektivität für schwere Kohlenwasserstoffe und schwere Mercaptane zur erhöhen.

### Besondere Ausgestaltungen der Erfindung

Ein zweiter Aspekt des erfindungsgemäßen Verfahrens ist dadurch gekennzeichnet, dass ein Teil des Prozesskondensatstroms als Rücklauf zu der Heißregenerierungskolonne zurückgeführt wird. Hierdurch wird ein kontinuierlicher Betrieb der Heißregenerierungskolonne ermöglicht und es wird gewährleistet, dass sich im oberen Bereich der Heißregenerierungskolonne eine hohe Wasser- bzw. Wasserdampfkonzentration einstellt, wodurch die Abtrennung des Waschmittels verbessert wird.

Ein dritter Aspekt des erfindungsgemäßen Verfahrens ist dadurch gekennzeichnet, dass das Zuführen des ersten Wasserstroms in die Absorptionskolonne oberhalb des dritten Waschmittelstroms erfolgt. Hierdurch wird eine separate Absorptionszone im Sinne einer Nachwäsche geschaffen, in der wasserlösliche Verunreinigungen mit hoher Selektivität abgetrennt werden können.

Ein vierter Aspekt des erfindungsgemäßen Verfahrens ist dadurch gekennzeichnet, dass die Wasserwäsche in einer eigenen Absorptionszone erfolgt, die in der oberen Kolonnensektion oberhalb der Zuführung für den dritten Waschmittelstrom angeordnet ist. Der zuvor erörterte Aspekt der Erfindung, eine separate Absorptionszone zu schaffen, in der wasserlösliche Verunreinigungen mit hoher Selektivität abgetrennt werden können, wird hierdurch noch verstärkt.

Ein fünfter Aspekt des erfindungsgemäßen Verfahrens ist dadurch gekennzeichnet, dass das Ausleiten des vierten Waschmittelstroms aus der oberen Kolonnensektion nach Sammeln auf der Oberseite des Trennbodens erfolgt, wobei letzterer als Abzugsboden oder Sammelboden, insbesondere als Kaminboden ausgestaltet ist. Hierdurch wird ein mit Verunreinigungen beladener Waschmittelstrom erhalten, der an schweren Kohlenwasserstoffen und an schweren Mercaptanen abgereichert ist und daher in besonderer Weise behandelt werden kann, ohne dass auf ein Vorhandensein der genannten Komponenten Rücksicht genommen werden muss.

Ein sechster Aspekt des erfindungsgemäßen Verfahrens ist dadurch gekennzeichnet, dass der vierte Waschmittelstrom in einen Flashbehälter geführt und dort in einen Flashdampfstrom und einen fünften Waschmittelstrom aufgetrennt wird, die beide in die Heißregenerierungskolonne eingeleitet werden, wobei der fünfte Waschmittelstrom vor dem Einleiten in die Heißregenerierungskolonne im indirekten Wärmetausch gegen den Sumpfproduktstrom vorgewärmt wird und der Sumpfproduktstrom dadurch abgekühlt wird. Beide Stoffströme, also der Flashdampfstrom und der aufgeheizte fünfte Waschmittelstrom werden sodann zu der Heißregenerierungskolonne geführt. Die vorherige Abtrennung des Flashdampfstroms verhindert, dass beim Aufheizen des fünften Waschmittelstroms vor dem Einleiten in die Heißregenerierungskolonne eine große zusätzliche Dampfmenge aus diesem freigesetzt wird, was besondere Vorkehrungen für den Transport einer Zweiphasenströmung überflüssig macht.

Ein siebter Aspekt des erfindungsgemäßen Verfahrens ist dadurch gekennzeichnet, dass der Sauergasstrom zu einer Claus-Anlage zum Gewinnen von Schwefel geführt wird. Auf diese Weise kann der Schwefelanteil als Wertprodukt wiedergewonnen werden.

Ein achter Aspekt des erfindungsgemäßen Verfahrens ist dadurch gekennzeichnet, dass ein Teil des organischen Spülstroms zu der Absorptionskolonne zurückgeführt wird und in diese am oberen Ende der unteren Kolonnensektion eingeleitet wird, wobei das Einleiten getrennt vom oder gemeinsam mit dem ersten Waschmittelstrom erfolgt. Der in die untere Kolonnensektion eingeleitete Teil des organischen Spülstroms wird gleichsam als Additiv zur Erhöhung der Selektivität des dortigen Waschmittels für schwere Kohlenwasserstoffe und schwere Mercaptane; ihre Abtrennung in der unteren Kolonnensektion wird daher weiter verbessert. Je nach Gehalt und Art der schweren Kohlenwasserstoffe und schweren Mercaptane kann es vorteilhaft sein, den rückgeführten Teil des organischen Spülstroms mit dem ersten Waschmittelstrom vorzumischen und gemeinsam mit diesem in die untere Kolonnensektion einzuleiten, da auf diese Weise eine homogene Verteilung des Additivs in dem ersten Waschmittelstrom erzielt wird. Alternativ kann es für andere Anwendungen Vorteile bieten, das Additiv separat in einer scharf begrenzten Zone der unteren Kolonnensektion einzuleiten und so eine scharf begrenzte Waschzone mit hoher Selektivität für schwere Kohlenwasserstoffe und schwere Mercaptane zu schaffen.

Ein neunter Aspekt des erfindungsgemäßen Verfahrens ist dadurch gekennzeichnet, der zweite Waschmittelstrom und der vierten und/oder der fünfte Waschmittelstrom getrennt in die Heißregenerierungskolonne eingeleitet werden, wobei der zweite Waschmittelstrom oberhalb des vierten und/oder fünften Waschmittelstroms in die Heißregenerierungskolonne eingeleitet wird. Der zweite Waschmittelstrom enthält die hochkonzentrierten schweren Kohlenwasserstoffe und schweren Mercaptane und trifft hierdurch auf einen Dampfstrom, der bereits im Vergleich zu dem weiter unten in der Kolonne liegenden Zugabepunkt des vierten bzw. fünften Waschmittelstroms an Wasserdampf angereichert und an dem Waschmittel abgereichert ist. Aufgrund der hierdurch erzeugten, hohen Polarität im oberen Teil der Heißregenerierungskolonne wird das Austreiben der schweren Kohlenwasserstoffe und schweren Mercaptane aus der Flüssigphase erleichtert und die nachfolgende Flüssig-Flüssig-Phasentrennung verbessert, da die lokale Konzentration des Waschmittels als Lösungsvermittler hier kleiner ist.

Ein zehnter Aspekt des erfindungsgemäßen Verfahrens ist dadurch gekennzeichnet, dass als für Schwefelkomponenten selektives Waschmittel mindestens ein Waschmittel, ausgewählt aus der folgenden Gruppe verwendet wird: N-Methyl-2-pyrrolidon (NMP), Propylencarbonat, Mischungen von Polyethylenglycol-dialkylethern, vorzugsweise Polyethylenglycol-dimethylethern. Diesen Waschmitteln ist gemein, dass sie flüssig und mindestens teilweise mit Wasser mischbar sind und einen höheren Siedepunkt als Wasser aufweisenden. Sie sind daher im erfindungsgemäßen Verfahren vorteilhaft einsetzbar.

In einem weiteren Aspekt ist die erfindungsgemäße Anlage dadurch gekennzeichnet, dass ferner Mittel umfasst werden, die es gestatten, dass ein Teil des Prozesskondensatstroms als Rücklauf zu der Heißregenerierungskolonne zurückgeführt wird. Die Vorteile dieses Aspektes der erfindungsgemäßen Anlage entsprechen denjenigen, die im Zusammenhang mit dem zweiten Aspekt des erfindungsgemäßen Verfahrens erörtert wurden.

In einem weiteren Aspekt ist die erfindungsgemäße Anlage dadurch gekennzeichnet, dass ferner Mittel umfasst werden, die es gestatten, dass das Zuführen des ersten Wasserstroms in die Absorptionskolonne oberhalb des dritten Waschmittelstroms erfolgt. Die Vorteile dieses Aspektes der erfindungsgemäßen Anlage entsprechen denjenigen, die im Zusammenhang mit dem dritten Aspekt des erfindungsgemäßen Verfahrens erörtert wurden.

In einem weiteren Aspekt ist die erfindungsgemäße Anlage dadurch gekennzeichnet, dass ferner Mittel umfasst werden, die es gestatten, dass die Wasserwäsche in einer eigenen Absorptionszone erfolgt, die in der oberen Kolonnensektion oberhalb der Zuführung für den dritten Waschmittelstrom angeordnet ist. Die Vorteile dieses Aspektes der erfindungsgemäßen Anlage entsprechen denjenigen, die im Zusammenhang mit dem vierten Aspekt des erfindungsgemäßen Verfahrens erörtert wurden.

In einem weiteren Aspekt ist die erfindungsgemäße Anlage dadurch gekennzeichnet, dass ferner Mittel umfasst werden, die es gestatten, dass das Ausleiten des vierten Waschmittelstroms aus der der oberen Kolonnensektion nach Sammeln auf der Oberseite des Trennbodens erfolgt, wobei letzterer als Abzugsboden oder Sammelboden, insbesondere als Kaminboden ausgestaltet ist. Die Vorteile dieses Aspektes der erfindungsgemäßen Anlage entsprechen denjenigen, die im Zusammenhang mit dem fünften Aspekt des erfindungsgemäßen Verfahrens erörtert wurden.

In einem weiteren Aspekt ist die erfindungsgemäße Anlage dadurch gekennzeichnet, dass ferner Mittel umfasst werden, die es gestatten, dass der vierte Waschmittelstrom in einen Flashbehälter geführt und dort in einen Flashdampfstrom und einen fünften Waschmittelstrom aufgetrennt wird, die beide in die Heißregenerierungskolonne eingeleitet werden, wobei der fünfte Waschmittelstrom vor dem Einleiten in die Heißregenerierungskolonne im indirekten Wärmetausch gegen den Sumpfproduktstrom vorgewärmt wird und der Sumpfproduktstrom dadurch abgekühlt wird. Die Vorteile dieses Aspektes der erfindungsgemäßen Anlage entsprechen denjenigen, die im Zusammenhang mit dem sechsten Aspekt des erfindungsgemäßen Verfahrens erörtert wurden.

In einem weiteren Aspekt ist die erfindungsgemäße Anlage dadurch gekennzeichnet, dass ferner Mittel umfasst werden, die es gestatten, dass der Sauergasstrom zu einer Claus-Anlage zum Gewinnen von Schwefel geführt wird. Die Vorteile dieses Aspektes der erfindungsgemäßen Anlage entsprechen denjenigen, die im Zusammenhang mit dem siebten Aspekt des erfindungsgemäßen Verfahrens erörtert wurden.

In einem weiteren Aspekt ist die erfindungsgemäße Anlage dadurch gekennzeichnet, dass ferner Mittel umfasst werden, die es gestatten, dass ein Teil des organischen Spülstroms zu der Absorptionskolonne zurückgeführt wird und in diese am oberen Ende der unteren Kolonnensektion eingeleitet wird, wobei das Einleiten getrennt vom oder gemeinsam mit dem ersten Waschmittelstrom erfolgt. Die Vorteile dieses Aspektes der erfindungsgemäßen Anlage entsprechen denjenigen, die im Zusammenhang mit dem achten Aspekt des erfindungsgemäßen Verfahrens erörtert wurden.

In einem weiteren Aspekt ist die erfindungsgemäße Anlage dadurch gekennzeichnet, dass ferner Mittel umfasst werden, die es gestatten, dass der zweite Waschmittelstrom und der vierten und/oder der fünfte Waschmittelstrom getrennt in die Heißregenerierungskolonne eingeleitet werden, wobei der zweite Waschmittelstrom oberhalb des vierten und/oder fünften Waschmittelstroms in die Heißregenerierungskolonne eingeleitet wird. Die Vorteile dieses Aspektes der erfindungsgemäßen Anlage entsprechen denjenigen, die im Zusammenhang mit dem neunten Aspekt des erfindungsgemäßen Verfahrens erörtert wurden.

### Ausführungsbeispiel

Weitere Merkmale, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigt die einzige Figur:

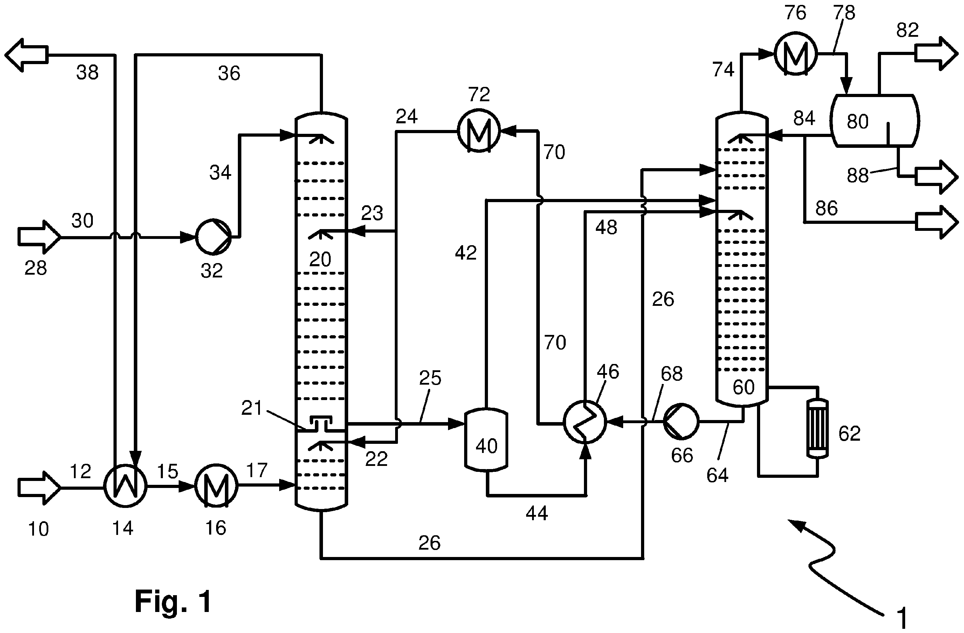

- Fig. 1: eine schematische Darstellung einer bevorzugten Ausgestaltung des erfindungsgemäßen Verfahrens bzw. einer entsprechenden Anlage.

Fig. 1 zeigt eine schematische Darstellung eines Verfahrens bzw. einer entsprechenden Anlage 1 zum Reinigen eines Schwefelkomponenten und Kohlenwasserstoffe enthaltenden Rohgasstroms, im vorliegenden Beispiel eines Regenerierungsabgases als Rohgas, das durch Rückspülen bzw. Desorbieren eines Adsorbers erhalten wird, der zuvor zum Abscheiden von Schwefelkomponenten aus einem Erdgasstrom verwendet wurde.

Über eine Zuleitung 10 wird der zu reinigende Rohgasstrom, der in einem Beispiel einen Druck von 25 bis 30 bar(a), in einem weiteren Beispiel einen Druck von 25 bis 55 bar(a) aufweist, in das Verfahren bzw. die Anlage 1 eingeführt und über Leitung 12 zu einem Wärmetauscher 14 geführt, in dem der Rohgasstrom im indirekten Wärmetausch gegen einen über Leitung 36 herangeführten und über Leitung 38 ausgeleiteten Reingasstrom abgekühlt wird. Der auf diese Weise vorgekühlte Rohgasstrom wird über Leitung 15 aus dem Wärmetauscher 14 ausgeleitet und einem weiteren Wärmetauscher 16 zugeführt, in dem eine weitere Abkühlung des Rohgasstroms im indirekten Wärmetausch gegen ein Kühlmedium erfolgt. Der demnach auf eine Eintrittstemperatur von beispielhaft 10 bis 25 °C abgekühlte Rohgasstrom wird über Leitung 17 aus dem Wärmetauscher ausgeleitet und in eine Absorptionskolonne 20 eingeleitet.

Die Absorptionskolonne 20 ist im vorliegenden Beispiel als Bodenkolonne mit Siebböden als Stoffaustauschzonen ausgestaltet. Weitere, im Wesentlichen gleichwirkende Ausgestaltungsmöglichkeiten der Stoffaustauschzonen umfassen eine Ausgestaltung als Bodenkolonne mit anderen Bodenarten, beispielsweise Glockenböden, als Füllkörperkolonne mit entsprechenden Füllkörpern, beispielsweise Kugeln, Ringen oder Sätteln, sowie als Kolonne mit strukturierten Packungselementen. Die Stoffaustauschzonen sind in Fig. 1 als gestrichelte Linien angedeutet. Oberhalb jeder Stoffaustauschzone ist eine Verteilungsvorrichtung für der Kolonne ausgegebene Flüssigkeiten angedeutet. Im vorliegenden Beispiel umfasst die Absorptionskolonne demnach drei Stoffaustauschzonen, die unterschiedliche Ausgaben wahrnehmen und mit unterschiedlichen Waschmitteln beaufschlagt werden. Allen erfindungsgemäßen Ausgestaltungen ist eine Aufteilung der Absorptionskolonne in eine obere Kolonnensektion oberhalb und eine untere Kolonnensektion unterhalb eines Trennbodens 21 gemein, der im vorliegenden Beispiel als Kaminboden ausgestaltet ist.

Über Leitung 17 wird das abgekühlte Rohgas in das untere Ende der untere Kolonnensektion der Absorptionskolonne 20 eingeleitet und dort in einer dort enthaltenen, ersten Stoffaustauschzone im Gegenstrom mit einer kleinen Menge des regenerierten Waschmittels in Kontakt gebracht, das im vorliegenden Beispiel NMP als schwefelselektives Agens enthält und über Leitung 22 als erster Waschmittelstrom in die untere Kolonnensektion der Absorptionskolonne 20 eingeleitet wird. In einem Beispiel beträgt der erste Waschmittelstrom (Leitung 22) 1 bis 10 Vol.-%, bevorzugt 1 bis 5 Vol.-% des Hauptlösungsmittelstromes in Leitung 24.

Der somit an schweren Kohlenwasserstoffen und schweren Mercaptanen abgereicherte Rohgasstrom wird durch den Trennboden 21 aus der unteren Kolonnensektion ausgeleitet und in die obere Kolonnensektion eingeleitet. Der an schweren Kohlenwasserstoffen und an schweren Mercaptanen angereicherte Waschmittelstrom wird als zweiter Waschmittelstrom über Leitung 26 aus der unteren Kolonnensektion der Absorptionskolonne ausgeleitet und zu der Heißregenerierungskolonne 60 geführt.

Der über den Trennboden 21 in den unteren Bereich der oberen Kolonnensektion der Absorptionskolonne eingeleitete, an schweren Kohlenwasserstoffen und schweren Mercaptanen abgereicherte Rohgasstrom gelangt in eine weitere, zweite Stoffaustauschzone, in der er mit einem weiteren Teil des NMP enthaltenden Waschmittels im Gegenstrom in Kontakt gebracht wird, das als dritter Waschmittelstrom über Leitungen 24 und 23 herangeführt, in die Absorptionskolonne eingeleitet und mittels einer im Bild angedeuteten Verteilungsvorrichtung oberhalb der zweiten Stoffaustauschzone in diese eingeleitet wird. Diese zweite Stoffaustauschzone hat unter anderem die Aufgabe, leichte Mercaptane aus dem Rohgasstrom auszuwaschen.

Der aus der zweiten Stoffaustauschzone nach oben austretende, an leichten Mercaptanen abgereicherte Rohgasstrom gelangt in eine weitere, dritte Stoffaustauschzone, in der er mit einem ersten Wasserstrom im Gegenstrom in Kontakt gebracht wird, der über Zuleitung 28, Leitung 30, Pumpe 32 und Leitung 34 zu der Absorptionskolonne geführt und mittels einer im Bild angedeuteten Verteilungsvorrichtung oberhalb der dritten Stoffaustauschzone in diese eingeleitet wird. Diese dritte Stoffaustauschzone hat unter anderem die Aufgabe, verbliebene, wasserlösliche Verunreinigungen, beispielsweise Schwefelwasserstoff, aus dem Rohgasstrom auszuwaschen. Der somit an leichten Mercaptanen und an Schwefelwasserstoff abgereicherte Rohgasstrom wird als Reingasstrom über Leitungen 36 und 38 sowie Wärmetauscher 14 aus der Absorptionskolonne ausgeleitet und einer bildlich nicht dargestellten Verwendung zugeführt.

Die aus der zweiten und der dritten Stoffaustauschzone abfließenden, mit absorbierten Stoffen wie Mercaptanen und Schwefelwasserstoff beladenen und Wasser und NMP enthaltenden Waschmittelströme werden auf dem Trennboden gesammelt und über Leitung 25 von diesem abgeführt, aus der Absorptionskolonne als vierter Waschmittelstrom ausgeleitet und in einen Flashbehälter 40 eingeleitet. In diesem erfolgt durch Entspannung des vierten Waschmittelstroms die Abtrennung eines Flashdampfstroms, der über Leitung 42 ausgeleitet und zu der Heißregenerierungskolonne 60 geführt wird. Ferner wird hierbei ein fünfter Waschmittelstrom erhalten, der an flüchtigen Komponenten abgereichert ist. Der fünfte Waschmittelstrom wird über Leitung 44 aus dem Flashbehälter ausgeleitet und vor dem Einleiten in die Heißregenerierungskolonne über Leitung 48 in einem Wärmetauscher 46 im indirekten Wärmetausch gegen den Sumpfproduktstrom der Heißregenerierungskolonne vorgewärmt, wodurch letzterer vorgekühlt wird.

Die Heißregenerierungskolonne 60 umfasst im vorliegenden Ausführungsbeispiel eine obere und eine untere Stoffaustauschzone, die als Siebböden ausgestaltet sind. Weitere, im Wesentlichen gleichwirkende Ausgestaltungsmöglichkeiten der Stoffaustauschzonen umfassen eine Ausgestaltung als Bodenkolonne mit anderen Bodenarten, beispielsweise Glockenböden, als Füllkörperkolonne mit entsprechenden Füllkörpern, beispielsweise Kugeln, Ringen oder Sätteln, sowie als Kolonne mit strukturierten Packungselementen. Die Stoffaustauschzonen sind in Fig. 1 als gestrichelte Linien angedeutet. Oberhalb jeder Stoffaustauschzone ist eine Verteilungsvorrichtung für der Kolonne ausgegebene Flüssigkeiten angedeutet. Ferner umfasst die Heißregenerierungskolonne einen Aufkocher mit Zu- und Ableitung 62, mit dem der Heißregenerierungskolonne Heizenergie zugeführt wird, wodurch Waschmittel-Eigendampf erzeugt wird, der in der Heißregenerierungskolonne aufsteigt und als Strippmittel für die aus dem Waschmittel zu desorbierenden Stoffe dient. Im Sumpf der Heißregenerierungskolonne wird somit ein heißes, an Wasser, Kohlenwasserstoffen und an Schwefelkomponenten abgereichertes und somit regeneriertes Waschmittel erhalten, das über Leitung 64, Pumpe 66 und Leitung 68 als Sumpfprodukt aus der Heißregenerierungskolonne ausgeleitet wird, in einem Wärmetauscher 46 vorgekühlt wird und sodann über Leitung 70 einem Wärmetauscher 72 zugeführt und in letzterem auf die in der Absorptionskolonne benötigte Waschmitteltemperatur abgekühlt wird. Es kann dann über Leitungen 24, 23 und 22 als erster bzw. dritter Waschmittelstrom zu der Absorptionskolonne zurückgeführt werden.

Im vorliegenden Ausführungsbeispiel werden der aus dem vierten Waschmittelstrom erhaltene Flashdampfstrom und fünfte Waschmittelstrom über Leitungen 42 bzw. 48 oberhalb der unteren Stoffaustauschzone in die Heißregenerierungskolonne eingeleitet, während der zweite Waschmittelstrom, der über Leitung 26 aus der unteren Kolonnensektion der Absorptionskolonne ausgeleitet und zu der Heißregenerierungskolonne 60 geführt wurde, innerhalb oder oberhalb (bildlich nicht gezeigt) der oberen Stoffaustauschzone mittels geeigneter Verteilungsvorrichtung in die Heißregenerierungskolonne eingeleitet wird. Der zweite Waschmittelstrom enthält einen Teil, in einem Beispiel den überwiegenden Teil der in Strom 10 enthaltenen schweren Kohlenwasserstoffe und der schweren Mercaptane und trifft hierdurch in der oberen Stoffaustauschzone auf einen Dampfstrom, der bereits im Vergleich zu dem weiter unten in der Kolonne liegenden Zugabepunkt des vierten bzw. fünften Waschmittelstroms an Wasserdampf angereichert und an dem Waschmittel abgereichert ist. Aufgrund des hierdurch erzeugten, hohen Wassergehalt des Strippdampfs im oberen Teil der Heißregenerierungskolonne wird das Austreiben der schweren Kohlenwasserstoffe und schweren Mercaptane aus der Flüssigphase erleichtert und die nachfolgende Flüssig-Flüssig-Phasentrennung verbessert, da die lokale Konzentration des Waschmittels als Lösungsvermittler hier kleiner ist.

Über Leitung 74 wird ein an Wasser, Kohlenwasserstoffen und Schwefelkomponenten angereicherter, dampfförmiger Kopfproduktstrom aus der Heißregenerierungskolonne ausgeleitet, in einem Wärmetauscher 76 unter seinen Taupunkt abgekühlt und über Leitung 78 zu einer Gas-Flüssig-Flüssig-Phasentrennvorrichtung 80 geführt und in diese eingeleitet. In der Gas-Flüssig-Flüssig-Phasentrennvorrichtung erfolgt das Auftrennen des unter seinen Taupunkt abgekühlten, dampfförmigen Kopfproduktstroms in folgende Phasen:
(a) eine Gasphase, die Schwefelwasserstoff und leichte Mercaptane enthält und als Sauergasstrom über Leitung 82 aus dem Verfahren ausgeleitet wird,
(b) eine leichte Flüssigphase, die schwere Kohlenwasserstoffe und schwere Mercaptane enthält und als organischer Spülstrom über Leitung 88 aus dem Verfahren ausgeleitet wird, und
(c) eine schwere, Wasser enthaltende Flüssigphase, die mindestens teilweise als Prozesskondensatstrom über Leitungen 84 und 86 aus dem Verfahren ausgeleitet wird. Der restliche Anteil der Wasser enthaltenden, schweren Flüssigphase wird über Leitung 84 als Rücklauf zum Kopf der Heißregenerierungskolonne zurückgeführt und dieser dort aufgegeben.

In einem Beispiel kann ein Teil des über Leitung 88 aus dem Verfahren bzw. aus der Anlage ausgeleiteten organischen Spülstroms in die Gas-Flüssig-Flüssig-Phasentrennvorrichtung 80 zurückgeführt werden (bildlich nicht dargestellt), um die Flüssig-Flüssig-Phasentrennung zu verbessern. Das Verhältnis der Rückführung kann in einem Beispiel zwischen größer Null und 60 Vol.-% des in Leitung 88 geführten Stroms betragen. Das Verhältnis der Rückführung kann in einem weiteren Beispiel zwischen größer Null und 40 Vol.-% des in Leitung 88 geführten Stroms betragen. Das Verhältnis der Rückführung kann in einem weiteren Beispiel zwischen größer Null und 20 Vol.-% des in Leitung 88 geführten Stroms betragen.

In Weiterbildung der Erfindung kann der unter (a) gewonnene Sauergasstrom zu einer nicht bildlich gezeigten Claus-Anlage zum Gewinnen von elementarem Schwefel geführt werden. Auf diese Weise kann der Schwefelanteil als Wertprodukt wiedergewonnen werden.

In weiterer Weiterbildung der Erfindung können aus dem unter (b) gewonnenen organischen Spülstrom Wertprodukte, beispielsweise die BTX-Aromaten, also Benzol, Toluol und Xylole, auf dem Fachmann bekannte Weise gewonnen werden.

### Bezugszeichenliste

- [1]: Verfahren bzw. Anlage
- [10]: Zuleitung
- [12]: Leitung
- [14]: Wärmetauscher
- [15]: Leitung
- [16]: Wärmetauscher
- [20]: Absorptionskolonne
- [21]: Trennboden
- [22] - [26]: Leitung
- [28]: Zuleitung
- [30]: Leitung
- [32]: Pumpe
- [34] - [38]: Leitung
- [40]: Flashbehälter
- [42] - [44]: Leitung
- [46]: Wärmetauscher
- [48]: Leitung
- [60]: Heißregenerierungskolonne
- [62]: Aufkocher mit Zu- und Ableitung
- [64]: Leitung
- [66]: Pumpe
- [68] - [70]: Leitung
- [72]: Wärmetauscher
- [74]: Leitung
- [76]: Wärmetauscher
- [80]: Gas-Flüssig-Flüssig-Phasentrennvorrichtung
- [82] - [88]: Leitung

## Patentansprüche

1. Verfahren (1) zum Reinigen eines leichte und schwere Kohlenwasserstoffe und Schwefelkomponenten wie Schwefelwasserstoff sowie leichte und schwere Mercaptane enthaltenden Rohgasstroms durch Gaswäsche mit einem physikalisch wirkenden, flüssigen, mit Wasser mischbaren, einen höheren Siedepunkt als Wasser aufweisenden und für Schwefelkomponenten selektiven Waschmittel, umfassend folgende Schritte:
(a) Bereitstellen einer Absorptionskolonne (20) mit einer Vielzahl von Absorptionszonen, die jeweils mit oberflächenvergrößernden Einbauten wie Böden, strukturierten Packungen oder Füllkörpern ausgestattet sind, wobei die Absorptionskolonne (20) durch einen gasdurchlässigen, aber flüssigkeitsundurchlässigen Trennboden (21) in eine untere Kolonnensektion unterhalb des Trennbodens und eine obere Kolonnensektion oberhalb des Trennbodens aufgeteilt ist,
(b) Einleiten des zu reinigenden Rohgasstroms (10) in den unteren Bereich der unteren Kolonnensektion, Einleiten eines ersten Waschmittelstroms (22) in den oberen Bereich der unteren Kolonnensektion, Inkontaktbringen des Rohgasstroms mit dem ersten Waschmittelstrom im Gegenstrom, Ausleiten eines an schweren Kohlenwasserstoffen und an schweren Mercaptanen abgereicherten Rohgasstroms aus der unteren Kolonnensektion und Einleiten desselben in den unteren Bereich der oberen Kolonnensektion durch den Trennboden (21) hindurch, Ausleiten eines an schweren Kohlenwasserstoffen und an schweren Mercaptanen angereicherten zweiten Waschmittelstroms (26) aus der unteren Kolonnensektion,
(c) Einleiten eines dritten Waschmittelstroms (23) und eines ersten Wasserstroms (34) in die obere Kolonnensektion, Inkontaktbringen des an schweren Kohlenwasserstoffen und an schweren Mercaptanen abgereicherten Rohgasstroms mit dem dritten Waschmittelstrom und dem ersten Wasserstrom im Gegenstrom, Ausleiten eines an leichten Mercaptanen und an Schwefelwasserstoff abgereicherten Rohgasstroms als Reingasstrom (36) aus dem oberen Bereich der oberen Kolonnensektion, Ausleiten eines an leichten Mercaptanen, Schwefelwasserstoff und Wasser angereicherten vierten Waschmittelstroms (25) aus dem unteren Bereich der oberen Kolonnensektion,
(d) Einleiten des zweiten Waschmittelstroms (26) und des vierten Waschmittelstroms (25) in eine Heißregenerierungskolonne (60), Heißregenerieren des zweiten Waschmittelstroms und des vierten Waschmittelstroms in der Heißregenerierungskolonne (60) durch Strippen mit Eigendampf, der durch Erhitzen (62) des Kolonnensumpfs erzeugt wird,
(e) Ausleiten eines an Wasser, Kohlenwasserstoffen und Schwefelkomponenten abgereicherten Sumpfproduktstroms (64) aus der Heißregenerierungskolonne (60), Abkühlen (46) des Sumpfproduktstroms, Rückführen des abgekühlten Sumpfproduktstroms zu der Absorptionskolonne (20) und Einleiten desselben in die Absorptionskolonne als erster und/oder dritter Waschmittelstrom (22, 23),
(f) Ausleiten eines an Wasser, Kohlenwasserstoffen und Schwefelkomponenten angereicherten, dampfförmigen Kopfproduktstroms (74) aus der Heißregenerierungskolonne (60), Abkühlen (76) des dampfförmigen Kopfproduktstroms unter seinen Taupunkt und Zuführen des unter seinen Taupunkt abgekühlten, dampfförmigen Kopfproduktstroms (78) zu einer Gas-Flüssig-Flüssig-Phasentrennvorrichtung (80),
(g) Auftrennen des unter seinen Taupunkt abgekühlten, dampfförmigen Kopfproduktstroms (78) in
eine Gasphase, die Schwefelwasserstoff und leichte Mercaptane enthält und als Sauergasstrom (82) aus dem Verfahren ausgeleitet wird,
eine leichte Flüssigphase, die schwere Kohlenwasserstoffe und schwere Mercaptane enthält und als organischer Spülstrom (88) aus dem Verfahren ausgeleitet wird,
und eine schwere, Wasser enthaltende Flüssigphase, die mindestens teilweise als Prozesskondensatstrom (84, 86) aus dem Verfahren ausgeleitet wird.

2. Verfahren nach Anspruch 1, **dadurch gekennzeichnet, dass** ein Teil des Prozesskondensatstroms (84, 86) als Rücklauf (84) zu der Heißregenerierungskolonne (60) zurückgeführt wird.

3. Verfahren nach Anspruch 1 oder 2, **dadurch gekennzeichnet, dass** das Zuführen des ersten Wasserstroms (34) in die Absorptionskolonne (20) oberhalb des dritten Waschmittelstroms (23) erfolgt.

4. Verfahren nach Anspruch 3, **dadurch gekennzeichnet, dass** die Wasserwäsche in einer eigenen Absorptionszone erfolgt, die in der oberen Kolonnensektion oberhalb der Zuführung für den dritten Waschmittelstrom (23) angeordnet ist.

5. Verfahren nach einem der vorigen Ansprüche, **dadurch gekennzeichnet, dass** das Ausleiten des vierten Waschmittelstroms (25) aus der oberen Kolonnensektion nach Sammeln auf der Oberseite des Trennbodens (21) erfolgt, wobei letzterer als Abzugsboden oder Sammelboden, insbesondere als Kaminboden ausgestaltet ist.

6. Verfahren nach einem der vorigen Ansprüche, **dadurch gekennzeichnet, dass** der vierte Waschmittelstrom (25) in einen Flashbehälter (40) geführt und dort in einen Flashdampfstrom (42) und einen fünften Waschmittelstrom (44) aufgetrennt wird, die beide in die Heißregenerierungskolonne (60) eingeleitet werden, wobei der fünfte Waschmittelstrom (44) vor dem Einleiten in die Heißregenerierungskolonne (60) im indirekten Wärmetausch (46) gegen den Sumpfproduktstrom (64) vorgewärmt wird und der Sumpfproduktstrom (64) dadurch abgekühlt wird.

7. Verfahren nach einem der vorigen Ansprüche, **dadurch gekennzeichnet, dass** der Sauergasstrom (82) zu einer Claus-Anlage zum Gewinnen von elementarem Schwefel geführt wird.

8. Verfahren nach einem der vorigen Ansprüche, **dadurch gekennzeichnet, dass** ein Teil des organischen Spülstroms (88) zu der Absorptionskolonne (20) zurückgeführt wird und in diese am oberen Ende der unteren Kolonnensektion eingeleitet wird, wobei das Einleiten getrennt vom oder gemeinsam mit dem ersten Waschmittelstrom (22) erfolgt.

9. Verfahren nach einem der vorigen Ansprüche, **dadurch gekennzeichnet, dass** der zweite Waschmittelstrom (26) und der vierte (25) und/oder der fünfte Waschmittelstrom (44) getrennt in die Heißregenerierungskolonne (60) eingeleitet werden, wobei der zweite Waschmittelstrom (26) oberhalb des vierten und/oder fünften Waschmittelstroms in die Heißregenerierungskolonne (60) eingeleitet wird.

10. Verfahren nach einem der vorigen Ansprüche, **dadurch gekennzeichnet, dass** als für Schwefelkomponenten selektives Waschmittel mindestens ein Waschmittel, ausgewählt aus der folgenden Gruppe verwendet wird: N-Methyl-2-pyrrolidon (NMP), Propylencarbonat, Mischungen von Polyethylenglycol-dialkylethern, vorzugsweise Polyethylenglycol-dimethylethern.

11. Anlage (1) zum Reinigen eines leichte und schwere Kohlenwasserstoffe und Schwefelkomponenten wie Schwefelwasserstoff sowie leichte und schwere Mercaptane enthaltenden Rohgasstroms durch Gaswäsche mit einem physikalisch wirkenden, flüssigen, mit Wasser mischbaren und für Schwefelkomponenten selektiven Waschmittel, umfassend folgende, miteinander in Fluidverbindung stehende Baugruppen und Bestandteile:
(a) eine Absorptionskolonne (20) mit einer Vielzahl von Absorptionszonen, die jeweils mit oberflächenvergrößernden Einbauten wie Böden, strukturierten Packungen oder Füllkörpern ausgestattet sind, wobei die Absorptionskolonne (20) durch einen gasdurchlässigen, aber flüssigkeitsundurchlässigen Trennboden (21) in eine untere Kolonnensektion und eine obere Kolonnensektion aufgeteilt ist,
(b) Mittel (10) zum Einleiten des zu reinigenden Rohgasstroms in den unteren Bereich der unteren Kolonnensektion, Mittel (22) zum Einleiten eines ersten Waschmittelstroms in den oberen Bereich der unteren Kolonnensektion, Mittel zum Ausleiten eines an schweren Kohlenwasserstoffen und an schweren Mercaptanen abgereicherten Rohgasstroms aus der unteren Kolonnensektion und Mittel zum Einleiten desselben in den unteren Bereich der oberen Kolonnensektion durch den Trennboden (21) hindurch, Mittel (26) zum Ausleiten eines an schweren Kohlenwasserstoffen und an schweren Mercaptanen angereicherten zweiten Waschmittelstroms aus der unteren Kolonnensektion,
(c) Mittel (23, 34) zum Einleiten eines dritten Waschmittelstroms und eines ersten Wasserstroms in die obere Kolonnensektion, Mittel (36) zum Ausleiten eines an leichten Mercaptanen und an Schwefelwasserstoff abgereicherten Rohgasstroms als Reingasstrom aus dem oberen Bereich der oberen Kolonnensektion, Mittel (25) zum Ausleiten eines an leichten Mercaptanen, Schwefelwasserstoff und Wasser angereicherten vierten Waschmittelstroms aus dem unteren Bereich der oberen Kolonnensektion,
(d) eine Heißregenerierungskolonne (60), Mittel (26, 25) zum Einleiten des zweiten Waschmittelstroms und des vierten Waschmittelstroms in die Heißregenerierungskolonne (60),
(e) Mittel (64) zum Ausleiten eines an Wasser, Kohlenwasserstoffen und Schwefelkomponenten abgereicherten Sumpfproduktstroms aus der Heißregenerierungskolonne (60), Mittel (46) zum Abkühlen des Sumpfproduktstroms, Mittel (70, 72, 24) zum Rückführen des abgekühlten Sumpfproduktstroms zu der Absorptionskolonne (20) und Mittel (22, 23) zum Einleiten desselben in die Absorptionskolonne (20) als erster und/oder dritter Waschmittelstrom,
(f) Mittel (64) zum Ausleiten eines an Wasser, Kohlenwasserstoffen und Schwefelkomponenten angereicherten, dampfförmigen Kopfproduktstroms aus der Heißregenerierungskolonne (60), Mittel (76) zum Abkühlen des dampfförmigen Kopfproduktstroms unter seinen Taupunkt, eine Gas-Flüssig-Flüssig-Phasentrennvorrichtung (80) und Mittel (78) zum Zuführen des unter seinen Taupunkt abgekühlten, dampfförmigen Kopfproduktstroms zu der Gas-Flüssig-Flüssig-Phasentrennvorrichtung (80),
(g) Mittel (82, 88, 86) zum Ausleiten folgender Stoffströme aus der Gas-Flüssig-Flüssig-Phasentrennvorrichtung (80):
eine Gasphase, die Schwefelwasserstoff und leichte Mercaptane enthält und als Sauergasstrom aus dem Verfahren ausgeleitet wird,
eine leichte Flüssigphase, die schwere Kohlenwasserstoffe und schwere Mercaptane enthält und als organischer Spülstrom aus dem Verfahren ausgeleitet wird,
und eine schwere, Wasser enthaltende Flüssigphase, die mindestens teilweise als Prozesskondensatstrom aus dem Verfahren ausgeleitet wird.

12. Anlage nach Anspruch 11, **dadurch gekennzeichnet, dass** ferner Mittel (84) umfasst werden, die es gestatten, dass ein Teil des Prozesskondensatstroms als Rücklauf zu der Heißregenerierungskolonne zurückgeführt wird.

13. Anlage nach Anspruch 11 oder 12, **dadurch gekennzeichnet, dass** ferner Mittel (28, 30, 32, 34) umfasst werden, die es gestatten, dass das Zuführen des ersten Wasserstroms in die Absorptionskolonne (20) oberhalb des dritten Waschmittelstroms erfolgt.

14. Anlage nach Anspruch 13, **dadurch gekennzeichnet, dass** ferner Mittel umfasst werden, die es gestatten, dass die Wasserwäsche in einer eigenen Absorptionszone erfolgt, die in der oberen Kolonnensektion oberhalb der Zuführung (23) für den dritten Waschmittelstrom angeordnet ist.

15. Anlage nach einem der vorigen Ansprüche, **dadurch gekennzeichnet, dass** ferner Mittel (25) umfasst werden, die es gestatten, dass das Ausleiten des vierten Waschmittelstroms aus der der oberen Kolonnensektion nach Sammeln auf der Oberseite des Trennbodens (21) erfolgt, wobei letzterer als Abzugsboden oder Sammelboden, insbesondere als Kaminboden ausgestaltet ist.

16. Anlage nach einem der vorigen Ansprüche, **dadurch gekennzeichnet, dass** ferner Mittel (25) umfasst werden, die es gestatten, dass der vierte Waschmittelstrom in einen Flashbehälter (40) geführt und dort in einen Flashdampfstrom (42) und einen fünften Waschmittelstrom (44) aufgetrennt wird, die beide in die Heißregenerierungskolonne (60) eingeleitet werden, wobei der fünfte Waschmittelstrom (44) vor dem Einleiten in die Heißregenerierungskolonne (60) im indirekten Wärmetausch (46) gegen den Sumpfproduktstrom (64) vorgewärmt wird und der Sumpfproduktstrom (64) dadurch abgekühlt wird.

17. Anlage nach einem der vorigen Ansprüche, **dadurch gekennzeichnet, dass** ferner Mittel (82) umfasst werden, die es gestatten, dass der Sauergasstrom zu einer Claus-Anlage zum Gewinnen von Schwefel geführt wird.

18. Anlage nach einem der vorigen Ansprüche, **dadurch gekennzeichnet, dass** ferner Mittel (88) umfasst werden, die es gestatten, dass ein Teil des organischen Spülstroms zu der Absorptionskolonne (20) zurückgeführt wird und in diese am oberen Ende der unteren Kolonnensektion eingeleitet wird, wobei das Einleiten getrennt vom oder gemeinsam mit dem ersten Waschmittelstrom (22) erfolgt.

19. Anlage nach einem der vorigen Ansprüche, **dadurch gekennzeichnet, dass** ferner Mittel (26, 25, 44) umfasst werden, die es gestatten, dass der zweite Waschmittelstrom und der vierte und/oder der fünfte Waschmittelstrom getrennt in die Heißregenerierungskolonne (60) eingeleitet werden, wobei der zweite Waschmittelstrom (26) oberhalb des vierten (25) und/oder fünften Waschmittelstroms (44) in die Heißregenerierungskolonne (60) eingeleitet wird.

## Claims

1. Process (1) for purifying a crude gas stream containing light and heavy hydrocarbons and sulfur components such as hydrogen sulfide and also light and heavy mercaptans by gas scrubbing using a physically acting, liquid, water-miscible scrubbing medium which has a boiling point higher than that of water and is selective for sulfur components, comprising the following steps:
(a) provision of an absorption column (20) having a plurality of absorption zones which are each equipped with surface area-enlarging internals such as trays, structured packings or packing elements, where the absorption column (20) is divided by a gas-permeable but liquid-impermeable separation tray (21) into a lower column section below the separation tray and an upper column section above the separation tray,
(b) introduction of the crude gas stream (10) to be purified into the lower region of the lower column section, introduction of a first scrubbing medium stream (22) into the upper region of the lower column section, contacting of the crude gas stream with the first scrubbing medium stream in countercurrent, discharge of a crude gas stream depleted in heavy hydrocarbons and in heavy mercaptans from the lower column section and introduction of this stream into the lower region of the upper column section through the separation tray (21), discharge of a second scrubbing medium stream (26) enriched in heavy hydrocarbons and in heavy mercaptans from the lower column section,
(c) introduction of a third scrubbing medium stream (23) and a first water stream (34) into the upper column section, contacting of the crude gas stream depleted in heavy hydrocarbons and in heavy mercaptans with the third scrubbing medium stream and the first water stream in countercurrent, discharge of a crude gas stream depleted in light mercaptans and in hydrogen sulfide as pure gas stream (36) from the upper region of the upper column section, discharge of a fourth scrubbing medium stream (25) enriched in light mercaptans, hydrogen sulfide and water from the lower region of the upper column section,
(d) introduction of the second scrubbing medium stream (26) and the fourth scrubbing medium stream (25) into a hot regeneration column (60), hot regeneration of the second scrubbing medium stream and of the fourth scrubbing medium stream in the hot regeneration column (60) by stripping with intrinsic vapour generated by heating (62) of the bottom region of the column,
(e) discharge of a bottom product stream (64) depleted in water, hydrocarbons and sulfur components from the hot regeneration column (60), cooling (46) of the bottom product stream, recirculation of the cooled bottom product stream to the absorption column (20) and introduction of this stream as first and/or third scrubbing medium stream (22, 23) into the absorption column,
(f) discharge of a gaseous overhead product stream (74) enriched in water, hydrocarbons and sulfur components from the hot regeneration column (60), cooling (76) of the gaseous overhead product stream to below its dew point and introduction of the gaseous overhead product stream (78) which has been cooled to below its dew point into a gas-liquid-liquid phase separation apparatus (80),
(g) separation of the gaseous overhead product stream (78) which has been cooled to below its dew point into a gas phase which contains hydrogen sulfide and light mercaptans and is discharged as acid gas stream (82) from the process,
a light liquid phase which contains heavy hydrocarbons and heavy mercaptans and is discharged as organic purge stream (88) from the process,
and a heavy liquid phase which contains water and is at least partly discharged as process condensate stream (84, 86) from the process.

2. Process according to Claim 1, **characterized in that** part of the process condensate stream (84, 86) is recirculated as runback (84) to the hot regeneration column (60).

3. Process according to Claim 1 or 2, **characterized in that** the introduction of the first water stream (34) into the absorption column (20) is effected above the third scrubbing medium stream (23).

4. Process according to Claim 3, **characterized in that** the water scrub occurs in a dedicated absorption zone which is arranged in the upper column section above the inlet for the third scrubbing medium stream (23).

5. Process according to any of the preceding claims, **characterized in that** the discharge of the fourth scrubbing medium stream (25) from the upper column section occurs after collection on the upper side of the separation tray (21), with the latter being configured as offtake tray or collection tray, in particular as chimney tray.

6. Process according to any of the preceding claims, **characterized in that** the fourth scrubbing medium stream (25) is fed into a flash vessel (40) and there separated into a flash vapour stream (42) and a fifth scrubbing medium stream (44), which are both introduced into the hot regeneration column (60), with the fifth scrubbing medium stream (44) being preheated by indirect heat exchange (46) with the bottom product stream (64) before introduction into the hot regeneration column (60) and the bottom product stream (64) being cooled thereby.

7. Process according to any of the preceding claims, **characterized in that** the acid gas stream (82) is fed to a Claus plant for isolating elemental sulfur.

8. Process, according to any of the preceding claims, **characterized in that** part of the organic purge stream (88) is recirculated to the absorption column (20) and is introduced into this at the upper end of the lower column section, with the introduction occurring separately from or together with the first scrubbing medium stream (22).

9. Process according to any of the preceding claims, **characterized in that** the second scrubbing medium stream (26) and the fourth (25) and/or the fifth scrubbing medium stream (44) are introduced separately into the hot regeneration column (60), with the second scrubbing medium stream (26) being introduced above the fourth and/or fifth scrubbing medium stream into the hot regeneration column (60).

10. Process according to any of the preceding claims, **characterized in that** at least one scrubbing medium selected from the following group: N-methyl-2-pyrrolidone (NMP), propylene carbonate, mixtures of polyethylene glycol dialkyl ethers, preferably polyethylene glycol dimethyl ethers, is used as scrubbing medium which is selective for sulfur components.

11. Plant (1) for purifying a crude gas stream containing light and heavy hydrocarbons and sulfur components such as hydrogen sulfide and also light and heavy mercaptans by gas scrubbing using a physically acting, liquid, water-miscible scrubbing medium which is selective for sulfur components, comprising the following assemblies and constituents which are in fluid connection with one another:
(a) an absorption column (20) having a plurality of absorption zones which are each equipped with surface area-enlarging internals such as trays, structured packings or packing elements, where the absorption column (20) is divided by a gas-permeable but liquid-impermeable separation tray (21) into a lower column section and an upper column section,
(b) means (10) for introducing the crude gas stream to be purified into the lower region of the lower column section, means (22) for introducing a first scrubbing medium stream into the upper region of the lower column section, means for discharging a crude gas stream depleted in heavy hydrocarbons and in heavy mercaptans from the lower column section and means for introducing this stream into the lower region of the upper column section through the separation tray (21), means (26) for discharging a second scrubbing medium stream enriched in heavy hydrocarbons and in heavy mercaptans from the lower column section,
(c) means (23, 34) for introducing a third scrubbing medium stream and a first water stream into the upper column section, means (36) for discharging a crude gas stream depleted in light mercaptans and in hydrogen sulfide as pure gas stream from the upper region of the upper column section, means (25) for discharging a fourth scrubbing medium stream enriched in light mercaptans, hydrogen sulfide and water from the lower region of the upper column section,
(d) a hot regeneration column (60), means (26, 25) for introducing the second scrubbing medium stream and the fourth scrubbing medium stream into the hot regeneration column (60),
(e) means (64) for discharging a bottom product stream depleted in water, hydrocarbons and sulfur components from the hot regeneration column (60), means (46) for cooling the bottom product stream, means (70, 72, 24) for recirculating the cooled bottom product stream to the absorption column (20) and means (22, 23) for introducing this stream as first and/or third scrubbing medium stream into the absorption column (20),
(f) means (64) for discharging a gaseous overhead product stream enriched in water, hydrocarbons and sulfur components from the hot regeneration column (60), means (76) for cooling the gaseous overhead product stream to below its dew point, a gas-liquid-liquid phase separation apparatus (80) and means (78) for introducing the gaseous overhead product stream which has been cooled to below its dew point into the gas-liquid-liquid phase separation apparatus (80),
(g) means (82, 88, 86) for discharging the following streams of material from the gas-liquid-liquid phase separation apparatus (80):
a gas phase which contains hydrogen sulfide and light mercaptans and is discharged as acid gas stream from the process,
a light liquid phase which contains heavy hydrocarbons and heavy mercaptans and is discharged as organic purge stream from the process,
and a heavy liquid phase which contains water and is at least partly discharged as process condensate stream from the process.

12. Plant according to Claim 11, **characterized in that** it further comprises means (84) which allow part of the process condensate stream to be recirculated as runback to the hot regeneration column.

13. Plant according to Claim 11 or 12, **characterized in that** it further comprises means (28, 30, 32, 34) which allow the introduction of the first water stream into the absorption column (20) to be effected above the third scrubbing medium stream.

14. Plant according to Claim 13, **characterized in that** it further comprises means which allow the water scrub to occur in a dedicated absorption zone which is arranged in the upper column section above the inlet (23) for the third scrubbing medium stream.

15. Plant according to any of the preceding claims, **characterized in that** it further comprises means (25) which allow discharge of the fourth scrubbing medium stream from the upper column section to occur after collection on the upper side of the separation tray (21), with the latter being configured as offtake tray or collection tray, in particular as chimney tray.

16. Plant according to any of the preceding claims, **characterized in that** it further comprises means (25) which allow the fourth scrubbing medium stream to be fed into a flash vessel (40) and there be separated into a flash vapour stream (42) and a fifth scrubbing medium stream (44), which are both introduced into the hot regeneration column (60), with the fifth scrubbing medium stream (44) being preheated by indirect heat exchange (46) with the bottom product stream (64) before introduction into the hot regeneration column (60) and the bottom product stream (64) being cooled thereby.

17. Plant according to any of the preceding claims, **characterized in that** it further comprises means (82) which allow the acid gas stream to be fed to a Claus plant for isolating sulfur.

18. Plant according to any of the preceding claims, **characterized in that** it further comprises means (88) which allow part of the organic purge stream to be recirculated to the absorption column (20) and to be introduced into this at the upper end of the lower column section, with the introduction occurring separately from or together with the first scrubbing medium stream (22).

19. Plant according to any of the preceding claims, **characterized in that** it further comprises means (26, 25, 44) which allow the second scrubbing medium stream and the fourth and/or the fifth scrubbing medium stream to be introduced separately into the hot regeneration column (60), with the second scrubbing medium stream (26) being introduced above the fourth (25) and/or fifth scrubbing medium stream (44) into the hot regeneration column (60).

## Revendications

1. Procédé (1) de purification d'un courant de gaz brut contenant des hydrocarbures légers et lourds et des composants soufrés tels que du sulfure d'hydrogène ainsi que des mercaptans légers et lourds, par lavage au gaz avec un agent de lavage à action physique, liquide, miscible à l'eau, présentant un point d'ébullition plus élevé que l'eau et sélectif pour les composants soufrés, comprenant les étapes suivantes :
(a) la fourniture d'une colonne d'absorption (20) avec une pluralité de zones d'absorption, qui sont chacune équipées de composants internes agrandissant la surface tels que des plateaux, des garnissages structurés ou des corps de remplissage, la colonne d'absorption (20) étant divisée par un plateau de séparation (21) perméable aux gaz, mais imperméable aux liquides en une section de colonne inférieure en dessous du plateau de séparation et une section de colonne supérieure au-dessus du plateau de séparation,
(b) l'introduction du courant de gaz brut à purifier (10) dans la zone inférieure de la section de colonne inférieure, l'introduction d'un premier courant d'agent de lavage (22) dans la zone supérieure de la section de colonne inférieure, la mise en contact du courant de gaz brut avec le premier courant d'agent de lavage à contre-courant, le déchargement d'un courant de gaz brut appauvri en hydrocarbures lourds et en mercaptans lourds à partir de la section de colonne inférieure et l'introduction de celui-ci dans la zone inférieure de la section de colonne supérieure à travers le plateau de séparation (21), le déchargement d'un deuxième courant d'agent de lavage (26) enrichi en hydrocarbures lourds et en mercaptans lourds à partir de la section de colonne inférieure,
(c) l'introduction d'un troisième courant d'agent de lavage (23) et d'un premier courant d'eau (34) dans la section de colonne supérieure, la mise en contact du courant de gaz brut appauvri en hydrocarbures lourds et en mercaptans lourds avec le troisième courant d'agent de lavage et le premier courant d'eau à contre-courant, le déchargement d'un courant de gaz brut appauvri en mercaptans légers et en sulfure d'hydrogène en tant que courant de gaz pur (36) à partir de la zone supérieure de la section de colonne supérieure, le déchargement d'un quatrième courant d'agent de lavage (25) enrichi en mercaptans légers, en sulfure d'hydrogène et en eau à partir de la zone inférieure de la section de colonne supérieure,
(d) l'introduction du deuxième courant d'agent de lavage (26) et du quatrième courant d'agent de lavage (25) dans une colonne de régénération à chaud (60), la régénération à chaud du deuxième courant d'agent de lavage et du quatrième courant d'agent de lavage dans la colonne de régénération à chaud (60) par extraction avec de la vapeur propre produite par chauffage (62) du fond de colonne,
(e) le déchargement d'un courant de produit de fond (64) appauvri en eau, en hydrocarbures et en composants soufrés à partir de la colonne de régénération à chaud (60), le refroidissement (46) du courant de produit de fond, le recyclage du courant de produit de fond refroidi vers la colonne d'absorption (20) et l'introduction de celui-ci dans la colonne d'absorption en tant que premier et/ou troisième courant d'agent de lavage (22, 23),
(f) le déchargement d'un courant de produit de tête sous forme de vapeur (74), enrichi en eau, en hydrocarbures et en composants soufrés à partir de la colonne de régénération à chaud (60), le refroidissement (76) du courant de produit de tête sous forme de vapeur en dessous de son point de rosée et l'amenée du courant de produit de tête sous forme de vapeur (78) refroidi en dessous de son point de rosée à un dispositif de séparation de phases gaz-liquide-liquide (80),
(g) la séparation du courant de produit de tête sous forme de vapeur (78), refroidi en dessous de son point de rosée en
une phase gazeuse, qui contient du sulfure d'hydrogène et des mercaptans légers et qui est déchargée du procédé en tant que courant de gaz acide (82),
une phase liquide légère, qui contient des hydrocarbures lourds et des mercaptans lourds et qui est déchargée du procédé en tant que courant de rinçage organique (88),
et une phase liquide lourde contenant de l'eau, qui est au moins partiellement déchargée du procédé en tant que courant de condensat de processus (84, 86).

2. Procédé selon la revendication 1, **caractérisé en ce qu'**une partie du courant de condensat de processus (84, 86) est recyclée en tant que reflux (84) vers la colonne de régénération à chaud (60).

3. Procédé selon la revendication 1 ou 2, **caractérisé en ce que** l'amenée du premier courant d'eau (34) dans la colonne d'absorption (20) s'effectue au-dessus du troisième courant d'agent de lavage (23).

4. Procédé selon la revendication 3, **caractérisé en ce que** le lavage à l'eau s'effectue dans une zone d'absorption propre, qui est agencée dans la section de colonne supérieure au-dessus de l'amenée pour le troisième courant d'agent de lavage (23).

5. Procédé selon l'une quelconque des revendications précédentes, **caractérisé en ce que** le déchargement du quatrième courant d'agent de lavage (25) à partir de la section de colonne supérieure s'effectue après collecte sur le côté supérieur du plateau de séparation (21), ce dernier étant conçu sous forme de plateau de soutirage ou de plateau de collecte, notamment sous forme de plateau à cheminée.

6. Procédé selon l'une quelconque des revendications précédentes, **caractérisé en ce que** le quatrième courant d'agent de lavage (25) est amené dans un réservoir flash (40) et y est séparé en un courant de vapeur flash (42) et un cinquième courant d'agent de lavage (44), qui sont tous deux introduits dans la colonne de régénération à chaud (60), le cinquième courant d'agent de lavage (44) étant préchauffé dans l'échange de chaleur indirect (46) contre le courant de produit de fond (64) avant l'introduction dans la colonne de régénération à chaud (60) et le courant de produit de fond (64) étant ainsi refroidi.

7. Procédé selon l'une quelconque des revendications précédentes, **caractérisé en ce que** le courant de gaz acide (82) est amené à une installation Claus pour la récupération de soufre élémentaire.

8. Procédé selon l'une quelconque des demandes précédentes, **caractérisé en ce qu'**une partie du courant de rinçage organique (88) est recyclée vers la colonne d'absorption (20) et introduit dans celle-ci à l'extrémité supérieure de la section de colonne inférieure, l'introduction s'effectuant séparément de ou conjointement avec le premier courant d'agent de lavage (22) .

9. Procédé selon l'une quelconque des revendications précédentes, **caractérisé en ce que** le deuxième courant d'agent de lavage (26) et le quatrième (25) et/ou le cinquième courant d'agent de lavage (44) sont introduits séparément dans la colonne de régénération à chaud (60), le deuxième courant d'agent de lavage (26) étant introduit dans la colonne de régénération à chaud (60) au-dessus du quatrième et/ou du cinquième courant d'agent de lavage.

10. Procédé selon l'une quelconque des revendications précédentes, **caractérisé en ce qu'**en tant qu'agent de lavage sélectif pour les composants soufrés, au moins un agent de lavage choisi dans le groupe suivant est utilisé : N-méthyl-2-pyrrolidone (NMP), carbonate de propylène, mélanges d'éthers dialkyliques de polyéthylèneglycol, de préférence d'éthers diméthyliques de polyéthylèneglycol.

11. Installation (1) pour la purification d'un courant de gaz brut contenant des hydrocarbures légers et lourds et des composants soufrés tels que du sulfure d'hydrogène ainsi que des mercaptans légers et lourds, par lavage au gaz avec un agent de lavage à action physique, liquide, miscible à l'eau et sélectif pour les composants soufrés, comprenant les ensembles et constituants suivants, en liaison fluidique les uns avec les autres :
(a) une colonne d'absorption (20) avec une pluralité de zones d'absorption, qui sont chacune équipées de composants internes agrandissant la surface tels que des plateaux, des garnissages structurées ou des corps de remplissage, la colonne d'absorption (20) étant divisée par un plateau de séparation (21) perméable aux gaz, mais imperméable aux liquides en une section de colonne inférieure et une section de colonne supérieure,
(b) des moyens (10) pour introduire le courant de gaz brut à purifier dans la zone inférieure de la section de colonne inférieure, des moyens (22) pour introduire un premier courant d'agent de lavage dans la zone supérieure de la section de colonne inférieure, des moyens pour décharger un courant de gaz brut appauvri en hydrocarbures lourds et en mercaptans lourds à partir de la section de colonne inférieure et des moyens pour introduire celui-ci dans la zone inférieure de la section de colonne supérieure à travers le plateau de séparation (21), des moyens (26) pour décharger un deuxième courant d'agent de lavage enrichi en hydrocarbures lourds et en mercaptans lourds à partir de la section de colonne inférieure,
(c) des moyens (23, 34) pour introduire un troisième courant d'agent de lavage et un premier courant d'eau dans la section de colonne supérieure, des moyens (36) pour décharger un courant de gaz brut appauvri en mercaptans légers et en sulfure d'hydrogène en tant que courant de gaz pur à partir de la zone supérieure de la section de colonne supérieure, des moyens (25) pour décharger un quatrième courant d'agent de lavage enrichi en mercaptans légers, en sulfure d'hydrogène et en eau à partir de la zone inférieure de la section de colonne supérieure,
(d) une colonne de régénération à chaud (60), des moyens (26, 25) pour introduire le deuxième courant d'agent de lavage et le quatrième courant d'agent de lavage dans la colonne de régénération à chaud (60),
(e) des moyens (64) pour décharger un courant de produit de fond appauvri en eau, en hydrocarbures et en composants soufrés à partir de la colonne de régénération à chaud (60), des moyens (46) pour refroidir le courant de produit de fond, des moyens (70, 72, 24) pour recycler le courant de produit de fond refroidi vers la colonne d'absorption (20) et des moyens (22, 23) pour introduire celui-ci dans la colonne d'absorption (20) en tant que premier et/ou troisième courant d'agent de lavage,
(f) des moyens (64) pour décharger un courant de produit de tête sous forme de vapeur, enrichi en eau, en hydrocarbures et en composants soufrés à partir de la colonne de régénération à chaud (60), des moyens (76) pour refroidir le courant de produit de tête sous forme de vapeur au-dessous de son point de rosée, un dispositif de séparation de phases gaz-liquide-liquide (80) et des moyens (78) pour amener le courant de produit de tête sous forme de vapeur, refroidi en dessous de son point de rosée, au dispositif de séparation de phases gaz-liquide-liquide (80),
(g) des moyens (82, 88, 86) pour décharger les courants de matière suivants à partir du dispositif de séparation de phases gaz-liquide-liquide (80) :
une phase gazeuse, qui contient du sulfure d'hydrogène et des mercaptans légers et est déchargée du procédé en tant que courant de gaz acide,
une phase liquide légère, qui contient des hydrocarbures lourds et des mercaptans lourds et est déchargée du procédé en tant que courant de rinçage organique,
et une phase liquide lourde contenant de l'eau, qui est au moins partiellement déchargée du procédé en tant que courant de condensat de processus.

12. Installation selon la revendication 11, **caractérisée en ce qu'**elle comprend en outre des moyens (84) permettant de recycler une partie du courant de condensat de processus vers la colonne de régénération à chaud en tant que reflux.

13. Installation selon la revendication 11 ou 12, **caractérisée en ce qu'**elle comprend en outre des moyens (28, 30, 32, 34) permettant d'effectuer l'amenée du premier courant d'eau dans la colonne d'absorption (20) au-dessus du troisième courant d'agent de lavage.

14. Installation selon la revendication 13, **caractérisée en ce qu'**elle comprend en outre des moyens permettant d'effectuer le lavage à l'eau dans une zone d'absorption propre, qui est agencée dans la section de colonne supérieure au-dessus de l'amenée (23) pour le troisième courant d'agent de lavage.

15. Installation selon l'une quelconque des revendications précédentes, **caractérisée en ce qu'**elle comprend en outre des moyens (25) permettant d'effectuer le déchargement du quatrième courant d'agent de lavage à partir de la section de colonne supérieure après collecte sur le côté supérieur du plateau de séparation (21), ce dernier étant conçu sous forme de plateau de soutirage ou de plateau de collecte, notamment sous forme de plateau à cheminée.

16. Installation selon l'une quelconque des revendications précédentes, **caractérisée en ce qu'**elle comprend en outre des moyens (25) permettant au quatrième courant d'agent de lavage d'être amené à un réservoir flash (40) et d'y être séparé en un courant de vapeur flash (42) et un cinquième courant d'agent de lavage (44), qui sont tous deux introduits dans la colonne de régénération à chaud (60), le cinquième courant d'agent de lavage (44) étant préchauffé dans l'échange de chaleur indirect (46) contre le courant de produit de fond (64) avant l'introduction dans la colonne de régénération à chaud (60) et le courant de produit de fond (64) étant ainsi refroidi.

17. Installation selon l'une quelconque des revendications précédentes, **caractérisée en ce qu'**elle comprend en outre des moyens (82) permettant au courant de gaz acide d'être amené à une installation Claus pour la récupération de soufre.

18. Installation selon l'une quelconque des revendications précédentes, **caractérisée en ce qu'**elle comprend en outre des moyens (88) permettant à une partie du courant de rinçage organique d'être recyclée vers la colonne d'absorption (20) et d'y être introduite à l'extrémité supérieure de la section de colonne inférieure, l'introduction étant effectuée séparément de ou conjointement avec le premier courant d'agent de lavage (22).

19. Installation selon l'une quelconque des revendications précédentes, **caractérisée en ce qu'**elle comprend en outre des moyens (26, 25, 44) permettant d'introduire séparément le deuxième courant d'agent de lavage et le quatrième et/ou le cinquième courant d'agent de lavage dans la colonne de régénération à chaud (60), le deuxième courant d'agent de lavage (26) étant introduit dans la colonne de régénération à chaud (60) au-dessus du quatrième (25) et/ou du cinquième courant d'agent de lavage (44) .
